Europäisches Patentamt

European Patent Office

Office européen des brevets

(11) Publication number: 0 347 484 A1

## EUROPEAN PATENT APPLICATION

(21) Application number: 88110073.9

(22) Date of filing: 24.06.88

(51) Int. Cl.4: G06F 12/06

(43) Date of publication of application:
27.12.89 Bulletin 89/52

(84) Designated Contracting States:
DE FR IT

(71) Applicant: ROBERT BOSCH GMBH
Postfach 10 60 50
D-7000 Stuttgart 10(DE)

(72) Inventor: Horbelt, Michael
Oberriexinger Weg 4/1
D-7143 Vaihingen/Enz 3(DE)
Inventor: Seibel, Berthold
Postfach 40 10 20
D-7140 Schwäbisch Hall 4(DE)

(54) Microcomputer having selectable datestorage.

(57) A microcomputer comprises a processor (15), on-board ROM (14) and an external store (13). The external store (13) is connected to the processor (15) by address and data lines (16, 17), the data line (17) being connected to earth via a resistance (30) which in the absence of the external store (13) causes a reference potential to be supplied to the processor 15. When an external store (13) is present, addressing of the store (13) causes the reference potential to disappear and hence the processor will use the external store (13) rather than the on-board ROM (14).

EP 0 347 484 A1

## Microcomputer having Selectable Data Storage

The present invention relates to a microcomputer having a processor and at least two stores for data, the processor being arranged to operate using one or other of the stores.

It is known to provide microcomputers with a store for data which are used by the processor of the microcomputer. Usually this data is fixed in ROM by mask programming and this is usually part of a large I.C. and is called on-board memory. A difficulty arises, however, when a customer requires a microcomputer requiring different data for the processor. If the number of microcomputers required by the customer is sufficiently high, then a new design of on-board ROM can be effected economically, otherwise it is usual to construct a hybrid circuit incorporating the original processor and ROM but to provide a further data store, often in the form of a PROM. It is then necessary to ensure that the processor accesses the further store for data and not the on-board ROM.

One way of ensuring this is disclosed in DE-A-3,518,964 where by operating a change-over switch, one or other of two stores is enabled. This however, is not always a practicable solution as it assumes that one can have access to the on-board ROM to enable connection.

A further difficulty arises in the case where it is wished to quickly modify data used by the processor either when a hybrid circuit has already been constructed or when it is wished to use different data than that contained in on-board ROM.

The present invention provides a microcomputer comprising a processor, a first data store, one other data store, address and data lines connecting the other data store to the processor, characterised in that the data line is connected to a reference potential, and the processor is arranged to be responsive to detection of the absence of the reference potential to cause the other data store to be used.

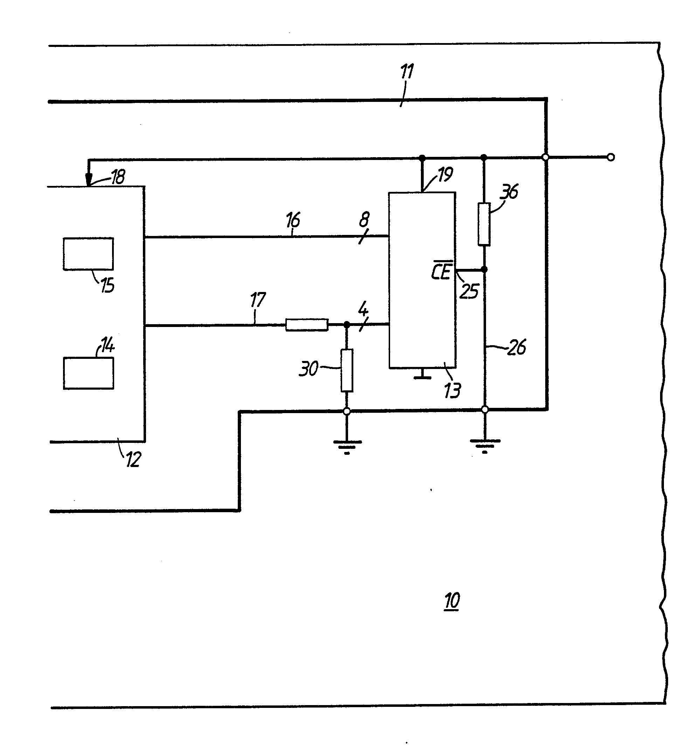

In order that the present invention be more readily understood, an embodiment thereof will not be described by way of example with reference to the accompanying drawing which shows a block diagram of a hybrid circuit with supplementary data store constructed according to the present invention.

In the preferred embodiment, a microcomputer is constructed on a printed circuit board 10 and comprises a hybrid circuit 11 formed from a microprocessor chip 12 and a data store in the form of a ROM or PROM 13. The chip 12 is provided with an on-board data store in the form of a ROM represented by broken line 14 and a processor 15.

The chip 12 is connected to the PROM 13 by address lines 16 and data lines 17. Power is supplied to the chip 12 via input 18 and to the PROM 13 via input 19.

The store 13 has its "enable" pin 25 connected to earth via resistor 36 in line 26, the store being enabled by a "low" potential on pin 25. It is to be noted that the store 13 is always enabled. The data lines 17 between the store 13 and the chip 12 are connected to earth by resistance 30. In use, when the microcomputer is switched on, an initialisation routine is carried out using a program stored in the internal memory of the microprocessor. This routine includes checks as to whether a storage unit 13 is connected to the chip 12. For this purpose, different addresses are polled via the address lines 16 and their response is checked via data lines 17. If no changes in potential occur, since the line is connected to earth through the resistor 3D, it is assumed that a storage unit 13 is not connected. If, however, owing to the address details entered, there are data signals on the data lines 17, the presence of a storage unit 13 is concluded and corresponding data and program parts are transfered from the storage unit 13 to the microprocessor during normal operation of the microcomputer. This configuration of the invention dispenses with the need for any additional switch or address part.

It is preferred that the storage unit 13 is located in a socket attached to the hybrid circuit so that the unit 13 may be easily inserted into the circuit.

This allows the socket to be permanently connected to the power supply to the enable line 26 and to the address and data lines 16, 17. This arrangement requires the PROM forming the supplementary data store to be removed from the socket when not required.

## Claims

1. A microcomputer comprising a processor (15), a first data store (14), one other data store (13), address and data lines (16, 17) connecting the other data store (13) to the processor, characterised in that the data line (17) is connected to a reference potential, and the processor is arranged to be responsive to detection of the absence of the reference potential to cause the other data store to be used.

2. A microcomputer according to claim 1, and comprising a socket connected to the address and data lines and removably receiving the other data store (13).

3. A microcomputer according to claim 1 or 2, characterised in that the data line (17) is connected to the reference potential via a resistance (30).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EDN MAGAZINE, vol. 26, no. 3, February 1981, page 88, Boston, Massachusetts, US; N.D. MACKINTOSH: "Interrogation tells muP which boards are present" * Whole article * | 1-3 | G 06 F 12/06 |
| Y | PATENT ABSTRACTS OF JAPAN, vol. 6, no. 41 (P-106)[919], 13th March 1982; & JP-A-56 157 554 (HITACHI SEISAKUSHO K.K.) 04-12-1981 * Abstract * | 1-3 | |

TECHNICAL FIELDS SEARCHED (Int. Cl.4)

G 06 F 12/06

The present search report has been drawn up for all claims

| Place of search | Date of completion of the search | Examiner |
|---|---|---|
| THE HAGUE | 14-02-1989 | LEDRUT P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................
& : member of the same patent family, corresponding document

EPO FORM 1503 03.82 (P0401)